# EUROPEAN PATENT APPLICATION

(11) **EP 4 830 975 A1**
(43) Date of publication of application: **28.10.2026**
(21) Application number: 24906918.8
(22) Date of filing: 24.10.2024
(51) Int. Cl.: B60L 15/00, F16H 59/44, F16H 59/58, F16H 61/02, G10K 15/04

(54) **ELECTRIC VEHICLE AND PROGRAM FOR CONTROLLING ELECTRIC VEHICLE**

(30) Priority: 20.12.2023 JP 2023215011
(71) Applicant: TOYOTA JIDOSHA KABUSHIKI KAISHA, Toyota-Shi, Aichi-Ken 471-8571 (JP)
(72) Inventor: ISAMI, Yoichiro, Toyota-shi, Aichi 471-8571 (JP); IMAMURA, Tatsuya, Toyota-shi, Aichi 471-8571 (JP); MIZUTANI, Kenji, Toyota-shi, Aichi 471-8571 (JP); OKADA, Tsuyoshi, Toyota-shi, Aichi 471-8571 (JP); YAMAMURO, Naoki, Toyota-shi, Aichi 471-8571 (JP); YUASA, Ryohei, Toyota-shi, Aichi 471-8571 (JP)
(74) Representative: Cabinet Beau de Loménie
(86) International application number: PCT/JP2024/037993
(87) International publication number: WO 2025/134530

(57) **Abstract**

The present disclosure provides an electric vehicle which can simulate gear shift operation of the manually shifted internal combustion engine vehicle. The electric vehicle comprises an accelerator pedal and a pseudo-sequential shifter. The pseudo- sequential shifter simulates a sequential shifter used for gear shift operation in a manually shifted internal combustion engine vehicle. The electric vehicle performs a manual mode based on a driver's selection. In the manual mode, operation of the pseudo-sequential shifter is associated with a virtual shift position, which is a shift position virtually simulated. In the manual mode, an opening degree of the accelerator pedal, the virtual shift position, and a vehicle speed of the electric vehicle are also associated with torque of the electric motor. When a steering angle of a steering wheel becomes equal to or larger than a reference angle during execution of the manual mode, the virtual shift position is automatically upshifted in accordance with the vehicle speed.

## Description

### [TECHNICAL FIELD]

The disclosure relates to a technique for controlling an electric vehicle having an electric motor as a power source.

### [BACKGROUND ART]

JP 2021-151168A discloses a prior art related to an electric vehicle which can simulate manual gear shift operation of a vehicle which is equipped with a manual transmission and has an internal combustion engine as a power source (hereinafter referred to as a manually shifted internal combustion engine vehicle) by controlling an electric motor. A driver of the electric vehicle can switch a plurality of virtual gear stage modes (virtual shift positions) using a paddle switch or the like. The paddle switch is a shift device that simulates a sequential shifter provided on a steering (hereinafter referred to as pseudo-sequential shifter).

### [PRIOR ART DOCUMENTS]

### [Patent Documents]

[Patent Document 1] JP 2021-151168A

### [SUMMARY OF INVENTION]

### [Problems to Be Solved by Invention]

According to the above-mentioned prior art, it is possible to experience gear shift operation of the manually shifted internal combustion engine vehicle by the electric vehicle. When driving, the driver can select the virtual shift position that simulates a shift position of the manually shifted internal combustion engine vehicle using the pseudo-sequential shifter. However, in a case where the pseudo-sequential shifter is provided on the steering, when the steering wheel is largely rotated to turn the electric vehicle, a positional relationship of the driver's hands on the steering wheel and the pseudo-sequential shifter changes. Therefore, when the steering angle becomes large, it becomes difficult for the driver to smoothly operate the pseudo-sequential shifter.

The disclosure is made in view of the above-mentioned problems. One object of the disclosure is to provide an electric vehicle which can simulate the gear shift operation of the manually shifted internal combustion engine vehicle and allows the driver to select a mode in which they can experience the operation of the manually shifted internal combustion engine vehicle improving drivability in the mode.

### [Means for Solving Problem]

The disclosure provides an electric vehicle having an electric motor as a driving source. The electric vehicle comprises an accelerator pedal used for driving the electric vehicle, a pseudo-sequential shifter, and a control device configured to control the electric vehicle in accordance with operation of the accelerator pedal. The pseudo- sequential shifter is an operation member provided on a steering and configured to simulate a sequential shifter used for gear shift operation in a manually shifted internal combustion engine vehicle. The control device is configured to execute the following processes. The first process is, based on a driver's selection, performing a manual mode, which is one of control modes. The manual mode is configured to associate operation of the pseudo-sequential shifter with a virtual shift position, which is a shift position virtually simulated. The manual mode is also configured to associate an opening degree of the accelerator pedal, the virtual shift position, and a vehicle speed of the electric vehicle with torque of the electric motor. The second process is, when a steering angle of a steering wheel becomes equal to or larger than a reference angle during execution of the manual mode, automatically upshift the virtual shift position in accordance with the vehicle speed.

According to one aspect of the disclosure, the pseudo-sequential shifter may be provided on the steering wheel. Alternatively, the pseudo-sequential shifter may be provided on a steering column.

The present disclosure provides a program for controlling an electric vehicle. The electric vehicle has an electric motor as a driving source and comprises an accelerator pedal used for driving the electric vehicle, a pseudo-sequential shifter, and a control device configured to control the electric vehicle in accordance with operation of the accelerator pedal. The pseudo- sequential shifter is an operation member provided on a steering and configured to simulate a sequential shifter used for gear shift operation in a manually shifted internal combustion engine vehicle. The program is configured to cause a computer to execute the following processes. The first process is, based on a driver's selection, performing a manual mode, which is one of control modes. The manual mode is configured to associate operation of the pseudo-sequential shifter with a virtual shift position, which is a shift position virtually simulated. The manual mode is also configured to associate an opening degree of the accelerator pedal, the virtual shift position, and a vehicle speed of the electric vehicle with torque of the electric motor. The second process is, when a steering angle of a steering wheel becomes equal to or larger than a reference angle during execution of the manual mode, automatically upshift the virtual shift position in accordance with the vehicle speed.

### [EFFECTS OF INVENTION]

According to the electric vehicle of the present disclosure, in the manual mode, when the steering angle of the steering wheel becomes equal to or larger than the reference angle, the virtual shift position is automatically upshifted in accordance with the vehicle speed of the electric vehicle. Even in a scene where the steering angle of the steering wheel becomes large and it becomes difficult for the driver to operate the pseudo-sequential shifter, the driver can smoothly upshift at the timing he/she wants, thereby improving the drivability.

### [BRIEF DESCRIPTION OF DRAWINGS]

[FIG. 1] The figure shows a configuration of an electric vehicle according to the present disclosure.
[FIG. 2] The figure shows an example of a pseudo-sequential shifter provided on a steering wheel.
[FIG. 3] The figure shows an example of a pseudo-sequential shifter provided on a steering column.
[FIG. 4] The figure shows a tree diagram showing an example of control modes of the electric vehicle which can be selected by a control device.
[FIG. 5] The figure shows a configuration of the control device related to driving control of the electric vehicle.
[FIG. 6] The figure shows a configuration of the control device related to sound control in the electric vehicle.
[FIG. 7] The figure shows a conceptual diagram showing an example of a scene in which automatic upshift is performed by the electric vehicle according to the embodiment.
[FIG. 8] The figure shows a flowchart showing an example of processing by the electric vehicle according to the embodiment.
[FIG. 9] The figure shows rotation of the steering wheel in a case where the pseudo-sequential shifter is provided on the steering column.
[FIG. 10] The figure is a graph for explaining timing of the automatic upshift by the electric vehicle according to the embodiment.

### [DESCRIPTION OF EMBODIMENTS]

Embodiments of the disclosure will be described with reference to the accompanying drawings.

### 1. Configuration of Power System of Electric Vehicle

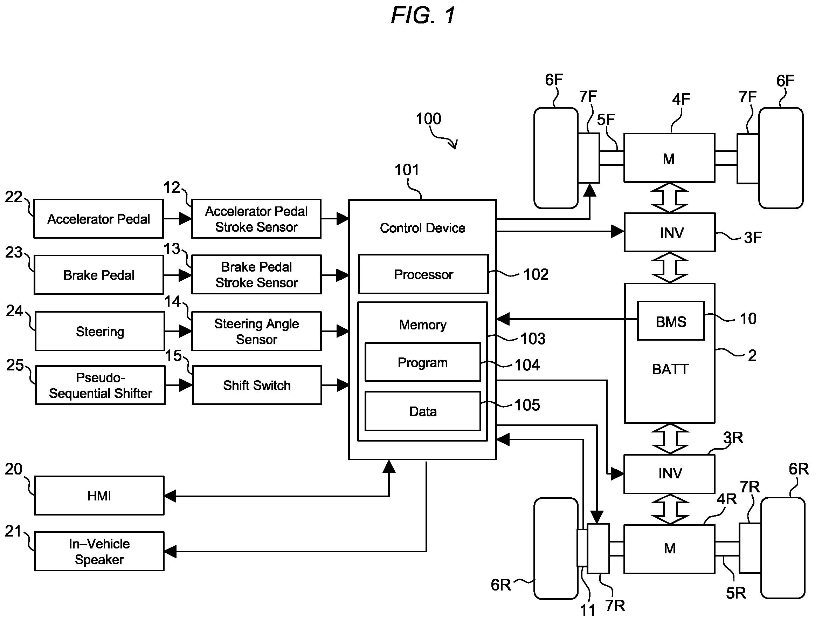

FIG. 1 is a schematic diagram showing a configuration of an electric vehicle 100 according to an embodiment of the present disclosure. First, a configuration of a power system of the electric vehicle 100 will be explained with reference to FIG. 1.

The electric vehicle 100 is equipped with two electric motors (M) 4F and 4R at the front and the rear as power sources for driving. The electric motors 4F and 4R are, for example, three-phase AC motors. The front electric motor 4F is connected to a front drive shaft 5F, which drives front wheels 6F. The rear electric motor 4R is connected to a rear drive shaft 5R, which drives rear wheels 6R. The front wheels 6F are suspended by electronically controlled front suspension 7F, in which the left and right are controlled independently. The rear wheels 6R are suspended by electronically controlled rear suspension 7R, in which the left and right are controlled independently.

The front electric motor 4F and the rear electric motor 4R are equipped with inverters (INV) 3F and 3R, respectively. The front inverter 3F and the rear inverter 3R are connected to a battery (BATT) 2. The battery 2 stores electrical energy for driving the electric motors 4F and 4R. In other words, the electric vehicle 100 is a battery electric vehicle (BEV) that drives using the electrical energy stored in the battery 2. The inverters 3F and 3R are, for example, voltage-type inverters and control the torque of the electric motors 4F and 4R by PWM control.

### 2. Configuration of Control System of Electric Vehicle

Next, a configuration of a control system of the electric vehicle 100 will be explained with reference to FIGS. 1 to 3.

The electric vehicle 100 is equipped with a battery management system (BMS) 10. The battery management system 10 is a device which monitors cell voltage, current, temperature, and the like, of the battery 2. The battery management system 10 has a function to estimate a state of charge (SOC) of the battery 2.

The electric vehicle 100 is equipped with a vehicle speed sensor 11. At least one of wheel speed sensors, which are not shown in the figures, provided in respective wheels of the left and right front wheels 6F and the left and right rear wheels 6R is used as the vehicle speed sensor 11. Furthermore, the electric vehicle 100 is equipped with an accelerator pedal stroke sensor 12. The accelerator pedal stroke sensor 12 is provided in an accelerator pedal 22 and outputs a signal indicating a pressing amount of the accelerator pedal 22, that is, an accelerator opening degree. Furthermore, the electric vehicle 100 is equipped with a brake pedal stroke sensor 13. The brake pedal stroke sensor 13 is provided in the brake pedal 23 and outputs a signal indicating a pressing amount of the brake pedal 23, that is, a brake opening degree. Furthermore, the electric vehicle 100 is equipped with a steering angle sensor 14. The steering angle sensor 14 is provided in a steering 24 and outputs a signal indicating a steering angle of the steering 24, that is, a rotation angle of the steering wheel.

The accelerator pedal 22, the brake pedal 23, and the steering 24 are driving operation members used for driving the electric vehicle 100. In addition to these driving operation members, the electric vehicle 100 is equipped with pseudo gear shift operation members, which simulate operation members used for shifting gear stages in a manually shifted internal combustion engine vehicle. The pseudo gear shift operation member includes at least a pseudo-sequential shifter 25 described below.

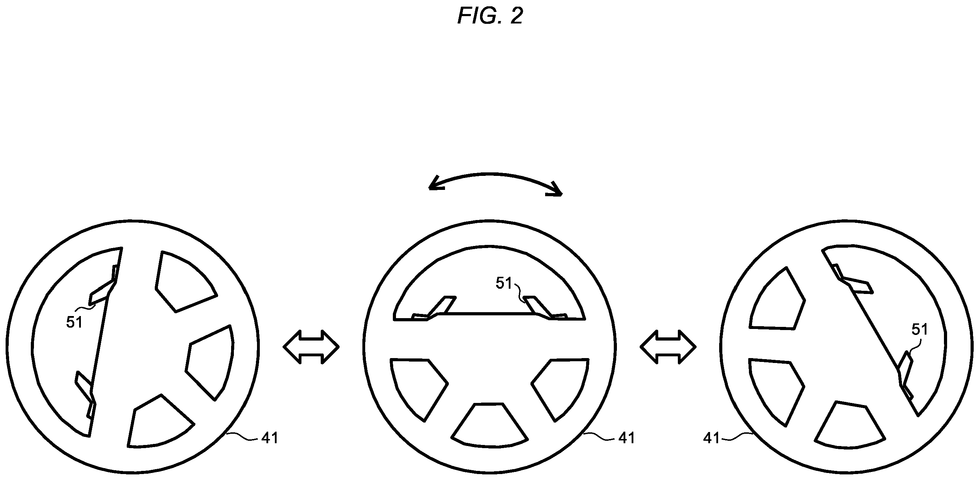

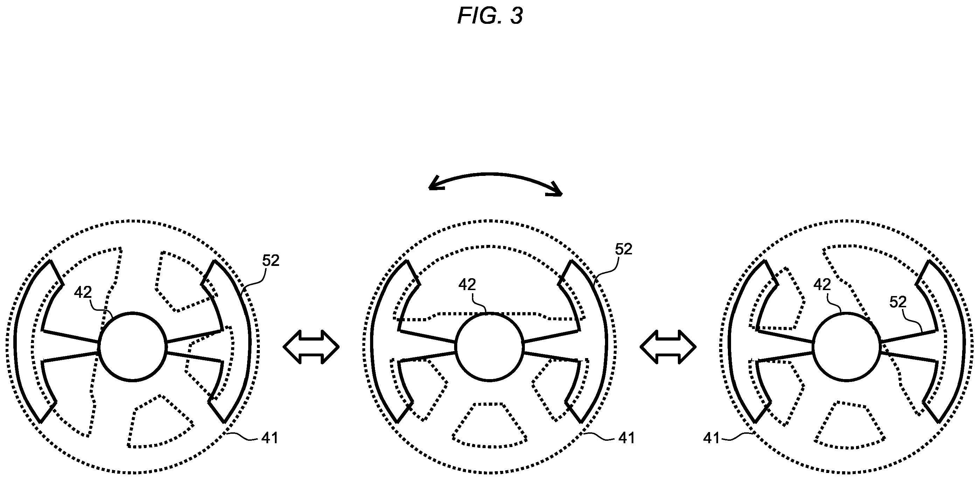

In the present embodiment, the pseudo-sequential shifter 25 is provided on the steering 24. FIGS. 2 and 3 show examples of the pseudo-sequential shifter 25.

FIG. 2 shows a pseudo-paddle shifter 51 attached to a steering wheel 41 as an example of the pseudo-sequential shifter 25. The pseudo-paddle shifter 51 is a dummy that is different from an actual steering wheel-mounted paddle shifter, which is a type of the sequential shifter. The pseudo-paddle shifter 51 includes a pair of paddles which have a structure similar to shift paddles attached to the steering wheel, and the left and right paddles can be operated independently. Since the pseudo-paddle shifter 51 is fixed to the steering wheel 41, when the steering wheel 41 rotates, the pseudo-paddle shifter 51 rotates in conjunction with the steering wheel 41.

The pseudo-paddle shifter 51 is equipped with a shift switch 15 (see FIG. 1). The shift switch 15 outputs an upshift signal when the right paddle is pulled and outputs a downshift signal when the left paddle is pulled. Alternatively, the left paddle may correspond to the upshift signal, and the right paddle may correspond to the downshift signal. However, since the electric vehicle 100 does not have an actual transmission, the shift position that is shifted up or down in accordance with the signal from the shift switch 15 is a virtual shift position.

FIG. 3 shows a pseudo-paddle shifter 52 attached to a steering column (steering shaft) 42 as an example of the pseudo-sequential shifter 25. The pseudo-paddle shifter 52 is a dummy that is different from an actual steering column-mounted paddle shifter. The pseudo-paddle shifter 52 includes a pair of paddles which have a structure similar to a shift paddle attached to the steering column, and the left and right paddles can be operated independently. Since the pseudo-paddle shifter 52 is fixed to the steering column 42, the position of the pseudo-paddle shifter 52 does not change even when the steering wheel 41 rotates.

The pseudo-paddle shifter 52 is equipped with a shift switch 15 (see FIG. 1). When the right paddle is pulled, an upshift signal is output from the shift switch 15, and when the left paddle is pulled, a downshift signal is output from the shift switch 15. Alternatively, the left paddle may correspond to the upshift signal, and the right paddle may correspond to the downshift signal.

As still another example, the pseudo-sequential shifter 25 may include buttons located on the steering wheel 41. For example, each of the buttons is provided on each of the left and right sides of the steering wheel 41, when the right button is pressed, the shift switch 15 outputs an upshift signal, and when the left button is pressed, the shift switch 15 outputs a downshift signal.

FIG. 1 is referred to again. The electric vehicle 100 is equipped with a human-machine interface (HMI) 20 and an in-vehicle speaker 21 as interfaces with the driver. The HMI 20 includes a touch panel display. The HMI 20 displays information on the touch panel display and accepts input from the driver via touch operation on the touch panel display. The in-vehicle speaker 21 provides information to the driver by voice and can also output virtual engine sound, which is described below.

The electric vehicle 100 is equipped with a control device 101. Sensors and devices to be controlled which are mounted on the electric vehicle 100 are connected to the control device 101 via an in-vehicle network. In addition to the battery management system 10, the vehicle speed sensor 11, the accelerator pedal stroke sensor 12, the brake pedal stroke sensor 13, the steering angle sensor 14, and the shift switch 15, various sensors are mounted on the electric vehicle 100.

The control device 101 is typically an electronic control unit (ECU). The control device 101 may be a combination of a plurality of ECUs. The control device 101 includes at least a processor 102 and a memory 103. The memory 103 includes a RAM, which temporarily stores data, and a ROM, which stores a program 104 that can be executed by the processor 102 and various kinds of data 105 related to the program. The program 104 is composed of a plurality of instructions. The processor 102 reads the program 104 and the data 105 from the memory 103 and executes them, generating control signals based on the signals acquired from respective sensors. The control device 101 may include one or more processors 102.

Control modes in which the control device 101 controls the electric vehicle 100 include at least an automatic mode and a manual mode. The driver can select the control mode by himself/herself by performing touch operation of the touch panel display of the HMI 20. More specifically, by the touch operation of the touch panel display of the HMI 20 being performed, one or more programs 104 associated with each touch operation are read from the memory 103 and executed by the processor 102. The control modes of the electric vehicle 100, which can be selected by the driver through the operation of the HMI 20 and are performed by the control device 101, and driving control and sound control of the electric vehicle 100 related to the control mode are described below.

### 3. Control Mode of Electric Vehicle

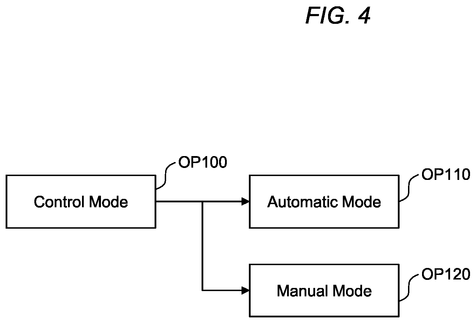

FIG. 4 is a tree diagram showing an example of the control modes of the electric vehicle 100 which can be selected by the control device 101. In the HMI 20, a selection screen is displayed on the touch panel display in accordance with the control tree shown in FIG. 4.

An initial screen of the HMI20 displays an option "Control Mode" OP100. When the option "Control Mode" OP100 is selected, the touch panel display shows an option "Automatic Mode" OP110 and an option "Manual Mode" OP120. When the option "Automatic Mode" OP110 is selected, the control mode of the electric vehicle 100 is switched to the automatic mode. The automatic mode is a control mode for driving the electric vehicle 100 as a normal BEV. In the automatic mode, the driver can basically drive the electric vehicle 100 by only operating the accelerator pedal 22, the brake pedal 23, and the steering wheel 41. In the automatic mode, the gear shift operation of the pseudo-sequential shifter 25 is disabled.

When the option "Manual Mode" OP120 is selected, the control mode of the electric vehicle 100 is switched to the manual mode. The manual mode is a control mode in which the electric vehicle 100 is operated as if it were the manually shifted internal combustion engine vehicle. In the manual mode, the driver uses the pseudo-sequential shifter 25 to perform gear shift operation. The operation of switching gear stages in the manual transmission is reproduced in accordance with the operation of the pseudo-sequential shifter 25. Clutch operation in the actual sequential-shift type manual transmission is performed automatically by a robot. Therefore, in the manual mode of the electric vehicle 100, a clutch opening degree is calculated automatically. Since the electric vehicle 100 does not have an actual clutch, the clutch opening degree calculated in the manual mode is a virtual clutch opening degree.

The manual mode may further include multiple control modes. The control modes that the driver can select may include, for example, control modes related to drive modes such as four-wheel drive or rear-wheel drive, and control modes related to a type of engine sound reproduced in the electric vehicle 100.

### 4. Driving Control of Electric Vehicle

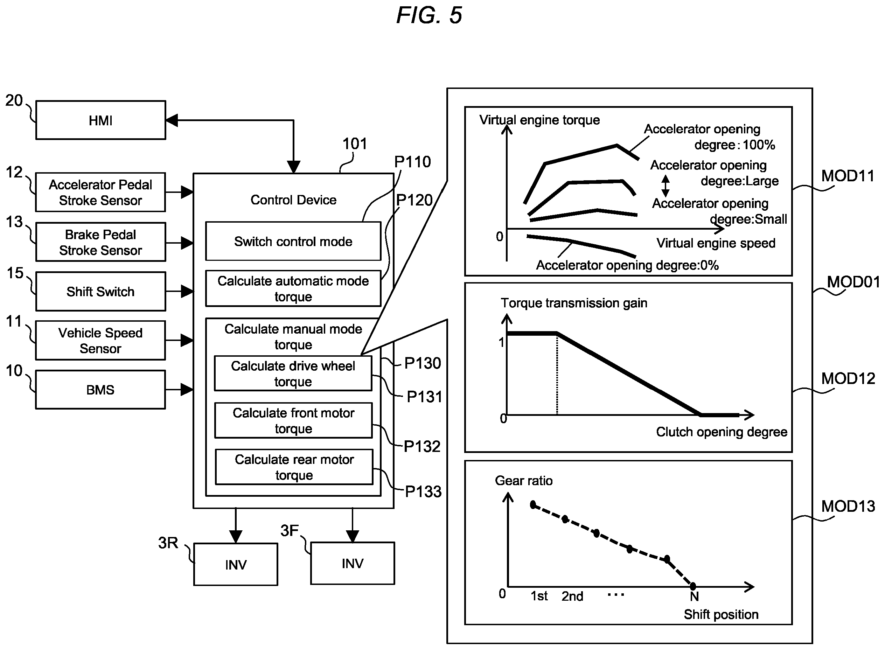

FIG. 5 shows a configuration of the control device 101 related to the driving control of the electric vehicle 100. Specifically, a configuration related to torque control in the driving control is shown. By the one or more programs 104 for the driving control stored in the memory 103 being executed by the processor 102, the processor 102 functions as a driving control device.

A control mode signal from the HMI 20 is input to the control device 101 which functions as the driving control device. The control mode signal includes information about the control mode selected by the driver. The control device 101 executes process P110 based on the control mode signal. In process P110, the control mode is switched in accordance with the control mode signal. In switching of the control mode, switching of the automatic mode and the manual mode particularly affect the driving control.

When the control mode is switched to the automatic mode, the control device 101 executes process P120 for calculating the torque in the automatic mode. In process P120, the control device 101 acquires the vehicle speed from the signal of the vehicle speed sensor 11 and acquires the accelerator opening degree from the signal of the accelerator pedal stroke sensor 12. The control device 101 has a motor torque map which uses the accelerator opening degree and the vehicle speed as parameters. The control device 101 inputs the vehicle speed and the accelerator opening degree into the motor torque map and controls the inverters 3F and 3R such that the electric motors 4F and 4R generate the torque obtained from the motor torque map.

When the control mode is switched to the manual mode, the control device 101 executes process P130 for calculating the torque in the manual mode. Process P130 includes process P131 for calculating the torque to be generated in the drive wheels. Further, process P130 includes process P132 and process P133. Process P132 is a process for calculating the torque to be generated by the front electric motor 4F, and process P133 is a process for calculating the torque to be generated by the rear electric motor 4R. Process P132 and process P133 are executed in accordance with the drive wheel torque calculated in process P130 and torque distribution between the front wheels 6F and the rear wheels 6R.

A vehicle model MOD01 is used to calculate the drive wheel torque in process P131. The vehicle model MOD01 includes an engine model MOD11, a clutch model MOD12, and a transmission model MOD13. An engine, a clutch, and a transmission virtually realized by the vehicle model MOD01 are referred to as a virtual engine, a virtual clutch, and a virtual transmission, respectively. In the engine Model MOD 11, the virtual engine is modeled. In the clutch model MOD12, the virtual clutch is modeled. In the transmission model MOD13, the virtual transmission is modeled.

The engine model MOD11 calculates a virtual engine speed and virtual engine torque. The virtual engine speed is calculated from the vehicle speed, an overall reduction ratio, and a slip ratio of the virtual clutch. The virtual engine torque is calculated from the virtual engine speed and the accelerator opening degree. The vehicle speed is acquired from the signal of the vehicle speed sensor 11. The accelerator opening degree is acquired from the signal of the accelerator pedal stroke sensor 12. The overall reduction ratio is a value obtained by multiplying a gear ratio of the virtual transmission by a reduction ratio determined by a mechanical structure from the virtual transmission to the drive wheels. In the engine model MOD11, a relationship between the virtual engine speed and the virtual engine torque is defined for each accelerator opening degree. Engine characteristics of the engine model MOD11 may be selectable by the driver through the operation of the HMI 20. For example, it may be possible to select the engine characteristics from a low-to-medium RPM type, a high-RPM type, and a full-range type.

The clutch model MOD12 calculates a torque transmission gain. The torque transmission gain is a gain used to calculate a torque transmission degree of the virtual clutch. In the clutch model MOD12, the torque transmission gain is given in relation to the clutch opening degree. The clutch opening degree is calculated using a clutch operation model. The clutch operation model is a model which simulates clutch operation of a model driver. The vehicle speed, the virtual engine speed, and the signal from the shift switch 15 are input to the clutch operation model.

The signal from the shift switch 15 is used to determine the timing of the clutch operation. When the driver's gear shift operation is detected by the signal from the shift switch 15, the clutch opening degree is maximized to disengage the virtual clutch in the clutch operation model. The vehicle speed and the virtual engine speed are used to calculate the clutch opening degree. In order to smoothly match a rotation speed of an input shaft of the virtual transmission, which is calculated from the vehicle speed, and the virtual engine speed, the clutch opening degree is calculated based on a rotation speed difference between the input shaft of the virtual transmission and the virtual engine speed in the clutch operation model.

The torque transmission gain calculated in the clutch model MOD12 is converted into a clutch torque capacity of the virtual clutch, that is, a virtual clutch torque capacity. Then, based on comparison between the virtual clutch torque capacity and the virtual engine torque calculated in the engine model MOD11, the virtual clutch torque input from the virtual clutch to the virtual transmission is calculated. In addition, in the clutch model MOD12, the slip ratio is calculated by subtracting the torque transmission gain from 1. The slip ratio is used to calculate the virtual engine speed in the engine model MOD11.

The transmission model MOD13 calculates a virtual gear ratio. The virtual gear ratio is a gear ratio determined by the virtual shift position in the virtual transmission. The virtual gear ratio is set for each virtual shift position. The largest virtual gear ratio is set for the first stage, and the virtual gear ratio decreases in the order of the second stage, the third stage, the fourth stage, and so on. The virtual shift position is raised by one stage in response to the upshift signal from the shift switch 15, and lowered by one stage in response to the downshift signal from the shift switch 15. There are no physical constraints on the number of the shift positions determined by the pseudo-sequential shifter 25. Therefore, for example, the driver may be able to arbitrarily set the number of the shift positions via the HMI 20.

The transmission model MOD13 calculates the virtual transmission torque using the virtual gear ratio and the virtual clutch torque. The virtual transmission torque is virtual torque output from the virtual transmission. The control device 101 controls the inverters 3F and 3R such that the output torque of the electric motors 4F and 4R changes in accordance with the virtual transmission torque. The virtual transmission torque changes discontinuously in accordance with switching of the virtual gear ratio. The discontinuous change in the virtual transmission torque generates torque shock in the electric vehicle 100, giving it the feel of the vehicle with a stepped transmission.

The vehicle model MOD01 calculates the drive wheel torque from the virtual transmission torque and the reduction ratio. The torque distribution between the front wheels 6F and the rear wheels 6R can be fixed or variable by controlling the electric motors 4F and 4R via inverters 3F and 3R. When the four-wheel drive mode is selected as the drive mode, the drive wheel torque becomes a total amount of the torque applied to the left and right front wheels 6F and the left and right rear wheels 6R. The torque distribution to the front wheels 6F and the rear wheels 6R may be fixed or may be actively or passively changed. When the rear-wheel drive mode is selected as the drive mode, the drive wheel torque becomes a total amount of the torque applied to the left and right rear wheels 6R.

In process P132, the torque of the front electric motor 4F (front motor torque) in the manual mode is calculated by multiplying the drive wheel torque calculated in process P131 by the torque distribution ratio to the front wheels 6F and the reduction ratio from the output shaft of the front electric motor 4F to the front wheels 6F. The control device 101 controls the front inverter 3F such that the front electric motor 4F generates the front motor torque calculated in process P132.

In process P133, the torque of the rear electric motor 4R (rear motor torque) in the manual mode is calculated by multiplying the drive wheel torque calculated in process P131 by the torque distribution ratio to the rear wheels 6R and the reduction ratio from the output shaft of the rear electric motor 4R to the rear wheels 6R. The control device 101 controls the rear inverter 3R such that the rear electric motor 4R generates the rear motor torque calculated in process P133.

In the configuration shown in FIG. 5, the battery management system 10 and the brake pedal stroke sensor 13 are not necessarily required for the driving control described above. However, if switching of the control mode affects the SOC of the battery 2, the signal from the battery management system 10 may be used as information to determine whether to switch the control mode or not. Also, in a case where the operation method of the electric vehicle 100 changes significantly, such as a case of switching the automatic mode and the manual mode, a condition for switching may be that the brake pedal 23 is pressed. In this case, the signal from the brake pedal stroke sensor 13 can be used as information to determine whether the brake pedal 23 is being pressed.

### 5. Sound Control of Electric Vehicle

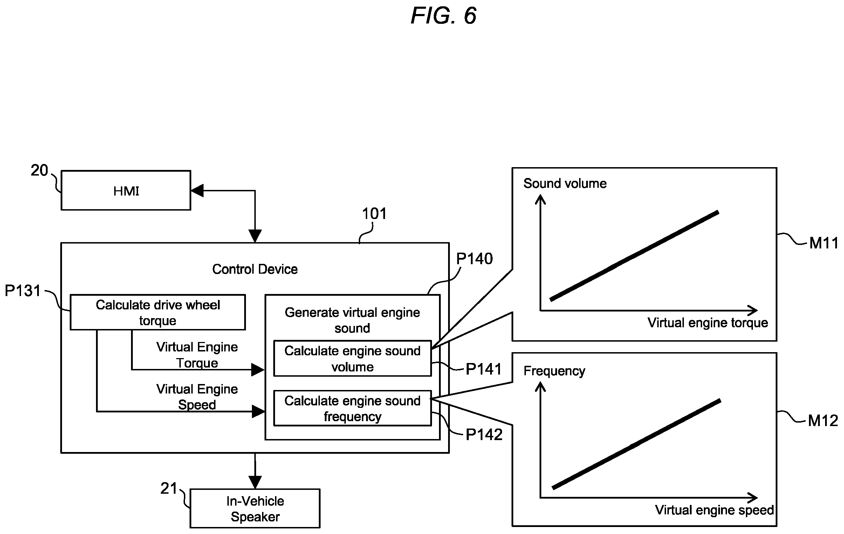

FIG. 6 shows a configuration of the control device 101 related to the sound control of the electric vehicle 100. By the one or more programs 104 for the sound control stored in the memory 103 being executed by the processor 102, the processor 102 functions as a sound control device. The processor 102 that functions as the torque control device and the processor 102 that functions as the sound control device may be separate processors or the same processor.

The control device 101 functioning as the sound control device can reproduce artificially generated sound from the in-vehicle speakers 21. One kind of the artificial sound is the virtual engine sound that simulates the engine sound of the conventional internal combustion engine vehicle. When the control mode signal indicating that the manual mode is selected is input from the HMI 20, the control device 101 functioning as the sound control device executes process P140. In process P140, the virtual engine sound is generated based on the virtual engine torque and the virtual engine speed calculated in process P131.

In process P140, predetermined engine sound is used as a sound source of the virtual engine sound reproduced by the in-vehicle speaker 21. The type of the engine sound may, for example, be selectable by the driver via the HMI 20. However, in process P140, the sound of the sound source is not used as it is. In process P140, for example, a sound pressure of the sound source is changed by an amplifier, and for example, a frequency of the sound source is changed by a frequency modulator.

Process P140 includes process P141, in which the sound pressure of the engine sound is calculated, and process P142, in which the frequency of the engine sound is calculated. In process P141, the sound pressure of the virtual engine sound is calculated from the virtual engine torque using a sound pressure map M11. The sound pressure map M11 is designed so that the sound pressure increases as the virtual engine torque increases. In process P142, the frequency of the virtual engine sound is calculated from the virtual engine speed using a frequency map M12. The frequency map M12 is designed so that the frequency increases as the virtual engine speed increases. The virtual engine torque and the virtual engine speed change depending on the accelerator operation, the shift operation, and the clutch operation of the driver. By changing the sound pressure and the frequency of the virtual engine sound in accordance with the virtual engine torque and the virtual engine speed changing in this way, it is possible to give the driver a sense of reality as if he/she were driving the actual manually shifted internal combustion engine vehicle.

### 6. First Embodiment - Pseudo-Sequential Shifter Provided on Steering Wheel

### 6-1. Automatic Upshift when Turning and Starting

As described above, the driver of the electric vehicle 100 can experience operation of the manually shifted internal combustion engine vehicle by operating the HMI 20 to switch the control mode to the manual mode. Even simply simulating the operation feeling of the manually shifted internal combustion engine vehicle would be enjoyable enough for the driver, but the goal is to further improve convenience.

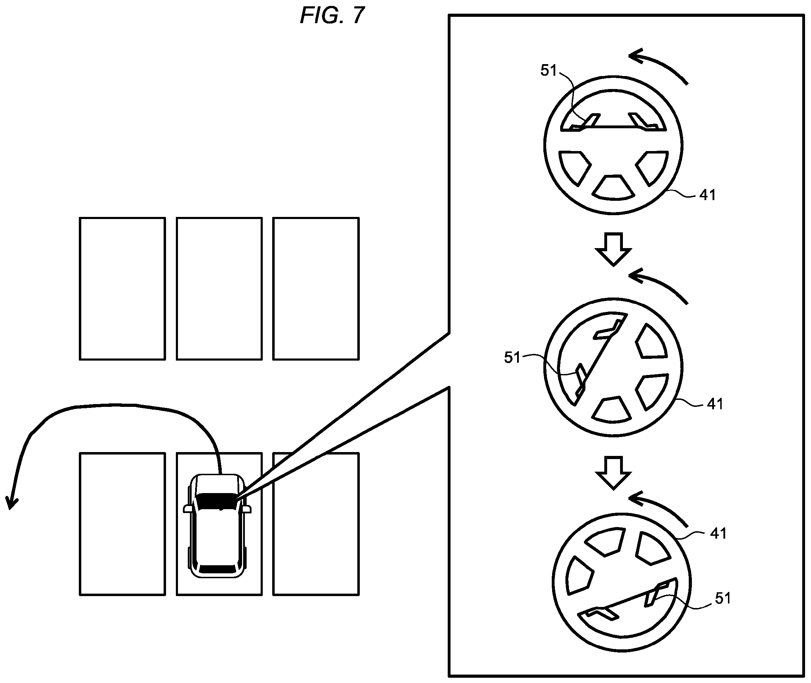

As one scene where the driver might feel inconvenience, a scene where, after the manual mode is selected, the electric vehicle 100 starts to move while turning, is considered. An example of such a scene is a scene where the electric vehicle 100 parked in a parking place is started to move from its parking space, as shown in FIG. 7. In the first embodiment, a case is considered where the pseudo-sequential shifter 25 is the pseudo-paddle shifter 51 provided on the steering wheel 41.

When the vehicle starts moving, the virtual shift position is in the first stage. The driver rotates the steering wheel 41 while pressing the accelerator pedal 22 to increase the virtual engine torque. As the virtual engine torque increases, the virtual engine sound gets louder, and the vehicle speed and the virtual engine speed increase. Generally, a driver of the manually shifted internal combustion engine vehicle judges how high the engine speed becomes by using the volume of the engine sound or the like as a guide, and then shift up the shift position to the second stage when the engine speed is raised to a certain level. Regarding the driver who has selected the manual mode in the electric vehicle 100, he/she will similarly consider shifting up the virtual shift position into the second stage when the vehicle speed is raised to a certain level, using the virtual engine speed as a guide.

However, at this time, since the steering wheel 41 is rotated, the pseudo-paddle shifter 51 rotates together with the steering wheel 41 and its position changes. FIG. 7 shows the steering wheel 41 during rotation. As the steering wheel 41 is rotated, and the rotation angle of the steering wheel 41 increases to approximately 180°, as shown in the bottom position of the figure, the left and right positions of the pseudo-paddle shifter 51 are reversed, with the left paddle corresponding to upshifting and the right paddle corresponding to downshifting as seen from the driver. Therefore, the driver may become confused about which paddle corresponds to upshifting, potentially making operation difficult. Furthermore, when the rotation angle increases, the driver may change his/her grip position on the steering wheel 41, which could lead to further confusion and make operation more difficult.

In such a situation, it is possible to continue driving without upshifting, but upshifting results in smoother acceleration. Therefore, in the electric vehicle 100 according to the embodiment, when the virtual engine speed becomes equal to or higher than a predetermined speed while the steering angle of the steering 24 is large, the virtual shift position is automatically upshifted in accordance with the virtual engine speed. The steering angle of the steering 24 can also be referred to as the rotation angle of the steering wheel 41.

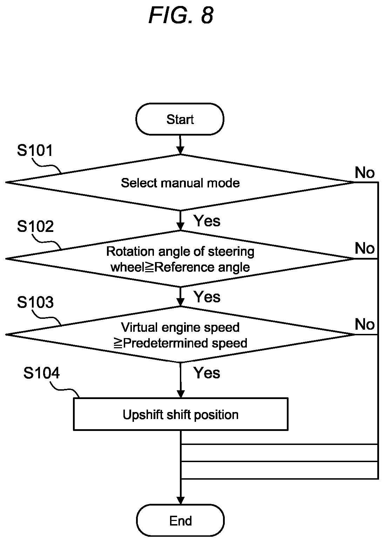

FIG. 8 is a flowchart showing an example of processing executed by the electric vehicle 100. The processing shown in the flowchart of FIG. 8 is realized by the one or more programs 104 for the driving control stored in the memory 103 executed by the processor 102.

According to the flow shown in FIG. 8, first, in step S101, it is determined whether the manual mode is selected as the control mode. If the manual mode is not selected, the processing ends.

If the manual mode is selected as the control mode, step S102 is executed. In step S102, it is determined whether the rotation angle of the steering wheel 41 is equal to or larger than a reference angle. The reference angle is set in advance. If the rotation angle of the steering wheel is less than the reference angle, the processing ends.

If the rotation angle of the steering wheel 41 is equal to or larger than the reference angle, step S103 is executed. In step S103, it is determined whether the virtual engine speed is equal to or higher than the predetermined speed. In step S103, the processor 102 may determine that the virtual engine speed is equal to or higher than the predetermined speed when a state in which the virtual engine speed is equal to or higher than the predetermined speed continues for a certain period or longer, and may determine that the virtual engine speed is below the predetermined speed when a state in which the virtual engine speed is higher than the predetermined speed terminates before the certain period elapses. If the virtual engine speed is below the predetermined speed, the processing ends.

If the virtual engine speed is equal to or higher than the predetermined speed, step S104 is executed. In step S104, the virtual shift position is shifted up from the first stage to the second stage.

### 6-2. Effect

According to the above processing, in a scene where the virtual engine speed is raised while the steering angle of the steering 24 is large, such as when the vehicle starts moving while turning, automatic upshift is performed in accordance with the virtual engine speed. Thus, smooth acceleration even in a scene where the driver has difficulty grasping the position of the paddle corresponding to the upshift becomes possible, thereby improving drivability.

### 6-3. Reference Angle

The reference angle for determination executed in step S102 is set to an angle close to 180°. When the rotation angle of the steering wheel 41 approaches 180°, the left and right positions of the paddles of the pseudo-paddle shifter 51 are reversed, making it difficult for the driver to grasp the positions of the paddles. However, the reference angle may be, for example, set to 150° or set to 120°. Alternatively, it is also possible to use 90° as the reference angle, where the left and right positions of the paddles are reversed with respect to the vertical line passing the center of the steering wheel 41, and it may be considered that the determination result in step S102 turns positive when the rotation angle of the steering wheel 41 becomes 90° or more.

### 7. Second Embodiment - Pseudo Paddle Shifter Provided on Steering Column

The second embodiment is an embodiment in which the pseudo-sequential shifter 25 is the pseudo-paddle shifter 52 provided on the steering column 42. Similar to the first embodiment, a scene is considered in which the driver starts the electric vehicle 100 while turning it in the manual mode. In the second embodiment as well, a problem may arise where the driver is unable to smoothly upshift when he/she wants to.

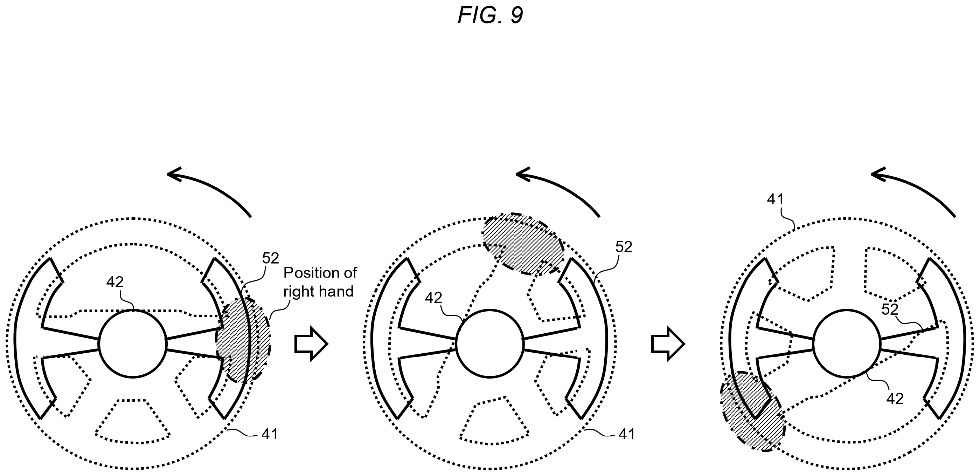

FIG. 9 shows the steering wheel 41 during rotation. Gray areas enclosed by dashed lines represent a position where the right hand is put on when the steering wheel 41 is in its initial position. Although the position of the pseudo-paddle shifter 52 itself does not change because it is fixed to the steering column 42, its positional relationship with the driver's hand changes as the steering wheel 41 rotates, making it difficult for the driver to operate the pseudo-paddle shifter 52. For example, when the rotation angle of the steering wheel 41 becomes at around 90°, the right hand moves away from the right paddle of the pseudo-paddle shifter 52, making it difficult for the driver to perform upshift operation. As the rotation angle further increases, the right hand and the right paddle of the pseudo-paddle shifter 52 become even further apart. When the rotation angle becomes large, the driver may change his/her grip position on the steering wheel 41, but even if he/she changes his/her grip position, the positional relationship between the driver's hands and the pseudo-paddle shifter 52 becomes different from the positional relationship when the steering wheel 41 was in its initial position, which may make it difficult for the driver to operate the pseudo-paddle shifter 52. Therefore, in the second embodiment as well, when the manual mode is selected and the steering angle of the steering 24 is larger than the reference angle, the electric vehicle 100 automatically upshifts the virtual shift position in accordance with the virtual engine speed.

The processing executed by the electric vehicle 100 can be represented by the flowchart in FIG. 8, similar to the first embodiment. Processes executed in steps S101 to S104 are the same as in the first embodiment. However, the reference angle for determination executed in step S102 is set to a smaller angle than that in the first embodiment. In the second embodiment, the driver's right hand moves away from the right paddle of the pseudo-paddle shifter 52 before the rotation angle of the steering wheel 41 reaches 90°, making it difficult for the driver to perform upshift operation. The reference angle may be, for example, 80°.

The processing like this in the electric vehicle 100 enables smooth acceleration by upshifting, even in a situation where the steering angle of the steering 24 becomes large, making it difficult for the driver to operate the pseudo-paddle shifter 52. In this way, drivability can be improved.

### 8. Timing of Upshift

The automatic upshift in accordance with the virtual engine speed by the electric vehicle 100 is described above. In the examples above, a scene where the vehicle starts moving while turning is described as the example of the situation the automatic upshift is applied, but it is not limited to a scene of starting. Furthermore, the shift position is not limited to being upshifted from the first stage to the second stage. Even in the situation other than starting, when the virtual engine speed is raised to or above the predetermined speed while the rotation angle of the steering wheel 41 is equal to or larger than the reference angle, the processor 102 performs the automatic upshift. Additionally, if the virtual shift position is the second stage or higher stage, it is upshifted to the next higher stage. This enables smooth acceleration even in a situation where it becomes difficult for the driver to operate the pseudo-sequential shifter 25 since the steering angle of the steering 24 becomes large, in a similar manner as when the vehicle starts moving while turning, thereby improving convenience for the driver.

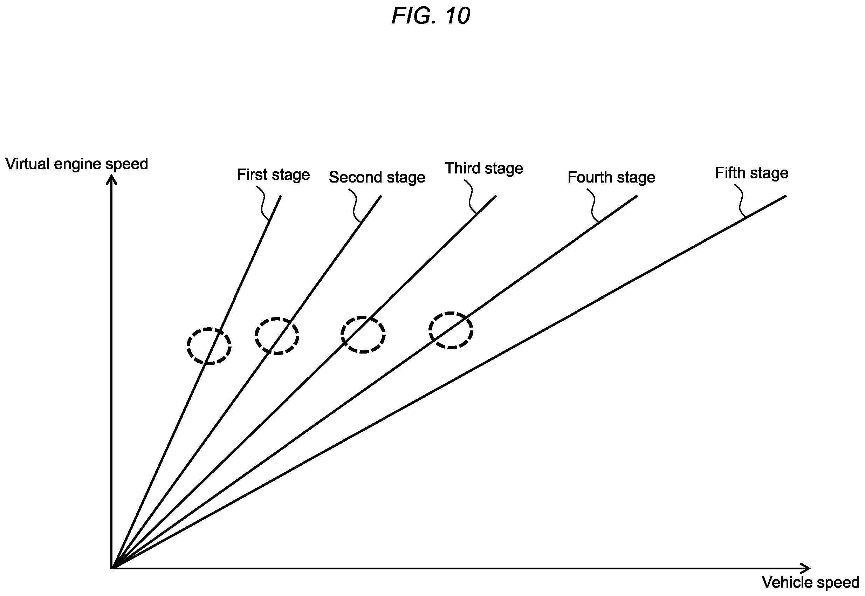

It is also said that the timing of the automatic upshift is determined by the vehicle speed. FIG. 10 shows the relationship between the vehicle speed and virtual engine speed of the electric vehicle 100. The dotted circles represent the timing when the virtual shift position is changed in a case where the automatic upshift is performed. Although the number of the stages of the virtual shift position is five, the first stage to the fifth stage in a case shown in FIG. 10, the number of the stages of the virtual shift positions is just an example. As shown in FIG. 10, if the pseudo-sequential shifter 25 is not operated and the clutch opening degree is constant, there is a one-to-one correspondence between the vehicle speed and the virtual engine speed at a given shift position. Therefore, it can be said that the timing of upshift, which is determined by the virtual engine speed, is also determined by the vehicle speed corresponding to the shift position.

### 9. Notification to Driver

The driver may be notified by the HMI 20 that an automatic upshift has been performed by the electric vehicle 100. For example, the display of the HMI 20 may show the current shift position, allowing the driver to know that the shift position has changed by viewing the display.

Alternatively, the notification that the automatic upshift has been performed need not to be explicitly made to the driver. When the virtual shift position changes due to upshifting, the virtual engine torque decreases, causing the engine sound to become discontinuously quieter. Therefore, even if the notification by the display or the like is not made, the driver can notice the automatic upshift.

### [Explanation of Symbols]

2 Battery, 3F Front inverter, 3R Rear inverter, 4F Front electric motor, 4R Rear electric motor, 5F Front drive shaft, 5R Rear drive shaft, 6F Front wheels, 6R Rear wheels, 7F Front suspension, 7R Rear suspension, 10 Battery management system, 11 Vehicle speed sensor, 12 Accelerator pedal stroke sensor, 13 Brake pedal stroke sensor, 14 Steering angle sensor, 15 Shift switch, 20 HMI, 21 In-vehicle speaker, 22 Accelerator pedal, 23 Brake pedal, 24 Steering, 25 Pseudo-sequential shifter, 41 Steering wheel, 42 Steering column, 51 Pseudo-paddle shifter, 52 Pseudo paddle shifter, 100 Electric vehicle, 101 Control device, 102 Processor, 103 Memory, 104 Program, 105 Data

## Claims

1. An electric vehicle having an electric motor as a driving source, comprising:
an accelerator pedal used for driving the electric vehicle;
a pseudo-sequential shifter provided on a steering configured to simulate a sequential shifter used for gear shift operation in a manually shifted internal combustion engine vehicle; and
a control device configured to control the electric vehicle in accordance with operation of the accelerator pedal, wherein
the control device is configured to:
based on a driver's selection, perform a control mode configured to associate operation of the pseudo-sequential shifter with a virtual shift position and associate an opening degree of the accelerator pedal, the virtual shift position, and a vehicle speed of the electric vehicle with torque of the electric motor, the virtual shift position being a shift position virtually simulated; and
when a steering angle of a steering wheel becomes equal to or larger than a reference angle during execution of the control mode, automatically upshift the virtual shift position in accordance with the vehicle speed.

2. The electric vehicle according to claim 1, wherein
the pseudo-sequential shifter is provided on the steering wheel.

3. The electric vehicle according to claim 1, wherein
the pseudo-sequential shifter is provided on a steering column.

4. The electric vehicle according to claim 2, wherein
the pseudo-sequential shifter is buttons provided on the steering wheel.

5. The electric vehicle according to claim 2 or 3, wherein
the pseudo-sequential shifter is a pseudo-paddle shifter configured to simulate a paddle shifter.

6. The electric vehicle according to claim 5, wherein
the pseudo-paddle shifter is a pair of paddles provided on left and right sides of the steering wheel.

7. The electric vehicle according to any one of claims 1 to 4, further comprising
a speaker configured to output virtual engine sound in the electric vehicle, the virtual engine sound being sound simulating engine sound of the manually shifted internal combustion engine vehicle, wherein
the control device is configured to, during the execution of the control mode:
reproduce the virtual engine sound by the speaker; and
change volume of the virtual engine sound in association with the opening degree of the accelerator pedal, the virtual shift position, and the vehicle speed.

8. The electric vehicle according to any one of claims 1 to 4, wherein
the control device is configured to
when the steering angle of the steering wheel becomes equal to or larger than the reference angle while the electric vehicle starts moving and during the execution of the control mode, automatically upshift the virtual shift position from first stage to second stage in accordance with the vehicle speed.

9. A program for controlling an electric vehicle having an electric motor as a driving source and comprising an accelerator pedal used for driving and a pseudo-sequential shifter provided on a steering that simulates a sequential shifter used for gear shift operation in a manually shifted internal combustion engine vehicle, the program configured to cause a computer to execute:
controlling the electric vehicle in accordance with operation of the accelerator pedal;
based on a driver's selection, performing a control mode in which operation of the pseudo-sequential shifter is associated with a virtual shift position and an opening degree of the accelerator pedal, the virtual shift position, and a vehicle speed of the electric vehicle are associated with torque of the electric motor, the virtual shift position being a shift position virtually simulated; and
when a steering angle of a steering wheel becomes equal to or larger than a reference angle during execution of the control mode, automatically upshift the virtual shift position in accordance with the vehicle speed.
